# EUROPÄISCHE PATENTSCHRIFT

(11) **EP 2 917 139 B1**
(45) Veröffentlichungstag und Bekanntmachung des Hinweises auf die Patenterteilung: **24.08.2016**
(21) Anmeldenummer: 13798948.9
(22) Anmeldetag: 05.11.2013
(51) Int. Cl.: B65G 60/00, B65G 1/04

(54) **EINRICHTUNG UND VERFAHREN ZUM UMSTAPELN VON WARENTRÄGERN**
INSTALLATION AND METHOD FOR TRANSFERRING ARTICLE CARRIERS IN STORAGE RACKS
DISPOSITIF ET PROCÉDÉ POUR TRANSFÉRER DES PORTE-CHARGES DANS DES RAYONNAGES DE STOCKAGE

(30) Priorität: 06.11.2012 DE 202012104254 U
(43) Veröffentlichungstag der Anmeldung: 16.09.2015
(73) Patentinhaber: Semoconsult GmbH, 86399 Bobingen (DE)
(72) Erfinder: HIRSCHEK, Herwig, 86399 Bobingen (DE); HIRSCHEK, Patrick, 86150 Augsburg (DE)
(74) Vertreter: Ernicke, Klaus Stefan
(86) Internationale Anmeldenummer: PCT/EP2013/073052
(87) Internationale Veröffentlichungsnummer: WO 2014/072290

(56) Entgegenhaltungen:
- EP-A1- 1 935 526
- EP-A1- 2 327 643
- WO-A1-2006/010550
- DE-A1-102009 021 265
- DE-U1-202006 003 068

## Beschreibung

Die Erfindung betrifft eine Umstapeleinrichtung mit den Merkmalen im Oberbegriff des Hauptanspruchs.

Eine solche Umstapeleinrichtung ist aus der
DE 37 33 622 A1 bekannt. Sie ist zur Zwischenspeicherung von leeren und beladenen Warenträgern bzw. Paletten vorgesehen und weist zwei turmartige Stapelvorrichtungen und dazwischen eine Ladevorrichtung zum Be- und Entladen der Warenträger mit einzelnen oder gruppenweise angeordneten Waren auf. Eine Transportvorrichtung mit einem einzelnen schienengebundenen Transportwagen verbindet dabei die Stapelvorrichtungen und die Ladevorrichtung.
Die DE 33 45 920 A1 zeigt eine ähnliche
Umstapeleinrichtung mit einer abgewandelten Transportvorrichtung, die eine stationären Rollenbahn für die Paletten mit einem darunter angeordneten Paletten-Schleppwagen aufweist.

Das Dokument EP 1 935 526 A1 zeigt eine Umstapeleinrichtung sowie ein Verfahren zum Umstapeln von Warenträgern. Ferner ist aus der Praxis eine Umstapeleinrichtung mit einem einzelnen Bandförderer für Werkstückträger bekannt, welcher die Stapelvorrichtungen und die Ladevorrichtung verbindet

Es ist Aufgabe der vorliegenden Erfindung eine verbesserte Umladetechnik, insbesondere eine verbesserte Umladeeinrichtung, aufzuzeigen.

Die Erfindung löst diese Aufgabe mit den Merkmalen im Hauptanspruch.

Die beanspruchte Umstapeltechnik für Warenträger hat den Vorteil einer höheren Flexibilität und Leistungsfähigkeit gegenüber vorbekannten Umstapeleinrichtungen. Zudem ist eine kompaktere Bauweise möglich. Die Umstapeleinrichtung ermöglicht es ferner, einen Warenträger beim Zusammenwirken mit einer Prozessvorrichtung, insbesondere beim Be- und Entladen mit Waren getaktet zu bewegen, sodass die von der Ladeeinrichtung getätigten Beschickungsvorgänge besonders sicher ablaufen können und immer ähnlich kurze Wege haben. Hierbei ist auch eine Übergabe von gruppenweise, z.B. in ein oder mehreren Reihen, angeordneten Waren mittels einer Ladevorrichtung on the fly möglich.

Ferner ist es von Vorteil, dass der Zugriff auf die gespeicherten Warenträger und auch auf die dort befindlichen Waren beliebig sein kann. Insbesondere kann die Umstapeleinrichtung mit einer Anlagenergänzung für die Verwirklichung eines echten First in-First out-Prinzips eingesetzt werden.

Die beanspruchte Anordnung von relativ zueinander bewegbaren Transportmitteln mit zum Transport und zur gegenseitigen Übergabe ausgebildeten Tragmitteln für Warenträger ist zur Erzielung einer hohen Leistungsfähigkeit und Schnelligkeit beim Behandlungsprozess, insbesondere Be- und Entladeprozess sowie beim Ein- und Ausspeichern in den Stapelvorrichtungen besonders günstig. Ein Transportmittel kann einen Warenträger an der Prozessvorrichtung bereitstellen und auch relativ zu dieser kontinuierlich oder getaktet bewegen, wobei ein anderes und insbesondere zweites Transportmittel einen anderen Warenträger an einer Stapelvorrichtung zum Ein- oder Auslagern übergeben oder übernehmen kann. Dies kann ein leerer oder beladener Warenträger sein.

Ferner kann die Prozessvorrichtung unterbrechungsfrei arbeiten, wobei durch die eigenständig und unabhängig voneinander beweglichen Transportmittel sofort nach Prozessende ein neuer Warenträger bereit gestellt werden kann. Prozesspausen und gegenseitige Abstände von Warenträgen, wie beim Stand der Technik können vermieden werden. Für den unterbrechungsfreien Betrieb ist auch die Übergabemöglichkeit eines Warenträgers vom einen auf das andere Transportmittel von Vorteil.

Zur Erzielung der vorgenannten Effekte haben die Transportmittel eine geeignete Ausbildung, wobei die bevorzugte Ausführungsform als Transportwagen mit einander überlappungsfähigen und steuerbaren Tragmitteln besondere Vorteile hinsichtlich Bauaufwand, Platzbedarf und Steuerungsmöglichkeiten bietet.

Die schnelle Übergabe oder Übernahme eines Warenträgers zwischen einem Transportmittel und einer Stapelvorrichtung wird durch die Anordnung einer Stützeinrichtung für den Warenträgerstapel und eine Vereinzelungs- und Übergabevorrichtung begünstigt. Hierdurch können die Zeiten für die Vereinzelung und Bereitstellung eines Warenträgers an der Stapelvorrichtung und für die Transportmittelbewegung entlang einer Bewegungsbahn miteinander überschnitten werden. Damit lassen sich besonders kurze Zeiten für den Warenträgerwechsel und für die Bereitstellung eines neuen Warenträgers an der Prozessvorrichtung erreichen. Dies ermöglicht eine besonders schnelle und leistungsfähige Prozesseinrichtung und kommt auch einer Steigerungsmöglichkeit für die Leistungsfähigkeit einer Gesamtanlage zugute, in welche eine Umstapeleinrichtung integriert wird und z.B. zum Zwischenspeichern von Warenträgern und Waren benutzt wird.

Die beanspruchte Umstapeltechnik eignet sich für beliebige Arten von Waren. Besondere Vorteile bestehen für Stückgüter, z.B. Päckchen, Dosen oder andere Behälter. Die Warenträger können hierfür eine geeignete und angepasste Ausbildung haben.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Umstapeleinrichtung für Warenträger mit zwei Stapelvorrichtungen, einer Prozessvorrichtung und einer verbindenden Transportvorrichtung für Warenträger,
- Figur 2:: eine Seitenansicht einer Stapelvorrichtung mit einem Transportmittel einer Transportvorrichtung in einer Seitenansicht gemäß Pfeil II von Figur 1,
- Figur 3:: eine Draufsicht auf die Umstapeleinrichtung gemäß Pfeil III von Figur 1,
- Figur 4:: eine vergrößerte Detailansicht der Transportvorrichtung und von Teil der Stapelvorrichtungen gemäß Figur 1,
- Figur 5:: eine vergrößerte Detailansicht zu Figur 2,
- Figur 6:: eine Draufsicht gemäß Figur 3 mit zwei Transportmitteln in einer Überlappstellung und
- Figur 7 bis 17:: einen Funktionsablauf der Umstapeleinrichtung in mehren Schritten.

Die Erfindung betrifft eine Umstapeleinrichtung (1) und ein Verfahren zum Umstapeln von Warenträgern (2).

Die Warenträger (2), die auch als Trays bezeichnet werden, dienen jeweils zur Aufnahme von mindestens einer, bevorzugt von mehreren Waren (3). Die Waren (3) können von beliebiger Art und Ausbildung sein. Bevorzugt handelt es sich um Stückgüter. Dies können z.B. Päckchen, Dosen, Flaschen oder andere Behälter sein.

Die Umstapeleinrichtung (1) dient zur Aufnahme und Einlagerung von mehreren leeren oder beladenen Warenträgern (2) in zwei oder mehr Trägerstapeln. Die Warenträger (2) können hierfür eine stapelfähige Ausbildung haben und besitzen einen Trägerboden (13) zur Aufnahme mehrerer Waren (3), die z.B. in einer oder mehreren Reihen darauf angeordnet werden können. Der Trägerboden (13) kann eine geschlossene plattenförmige Ausbildung aufweisen. Er kann alternativ eine an die Waren (3) adaptierte Ausbildung mit Mulden, einem Gefache oder anderen geeigneten Aufnahme- oder Führungsmitteln für die Waren (3) haben.

Der Trägerboden (13) kann auf einem Trägerrahmen (14) angeordnet sein, der an geeigneter Stelle eine oder mehrere Trägerstützen (15) für die gegenseitige Abstützung und Führung der Warenträger (2) im Stapel aufweisen. Die Trägerstützen (15) können z.B. an den Ecken eines prismatischen, insbesondere rechteckigen Trägerbodens (13) angeordnet sein und als hochstehende Trägerpfosten ausgebildet sein. Die Trägerstützen (15) können über die Waren (3) nach oben ragen. Sie können ferner eine nestfähige und gegenseitig führende Ausbildung haben. Sie weisen hierfür z.B. eine konische Spitze an der Oberseite und eine hierzu passende Aufnahme oder Stützstelle (18) an der Unterseite, z.B. eine konische Aufnahmeöffnung, auf. Hierüber können sich die Warenträger (2) im Trägerstapel aufeinander abstützen und gegenseitig führen.

Alternativ sind andere, z.B. leistenförmige Ausbildungen, der Trägerstützen (15) möglich. Die Trägerstützen können sich auch vom Trägerboden (13) nach unten oder nach unten und oben erstrecken. Sie können sich ferner nur über eine Teilhöhe der Waren (3) erstrecken. Dies ermöglicht eine sensorische Erfassung der oberen Bereiche aller auf dem Warenträger (2) befindlichen Waren (3) für eine Lagenkontrolle.

Die Umstapeleinrichtung (1) weist mehrere Stapelvorrichtungen (4,5) bzw. Stapelzonen (10,11) zur Aufnahme und Handhabung von jeweils mindestens einem Warenträgerstapel auf. Ferner weist die Umstapeleinrichtung (1) mindestens eine Prozesszone (12) und eine dortige Prozessvorrichtung (9) für die Durchführung eines oder mehrerer Prozess an oder mit den Waren (3) auf. Außerdem gehört zur Umstapeleinrichtung (1) eine Transportvorrichtung (6) für Warenträger (2), welche die Stapelvorrichtungen (4,5) und die ein oder mehreren Prozessvorrichtungen (9) miteinander verbindet und den Trägertransport zwischen diesen Vorrichtungen (4,5,9) ermöglicht.

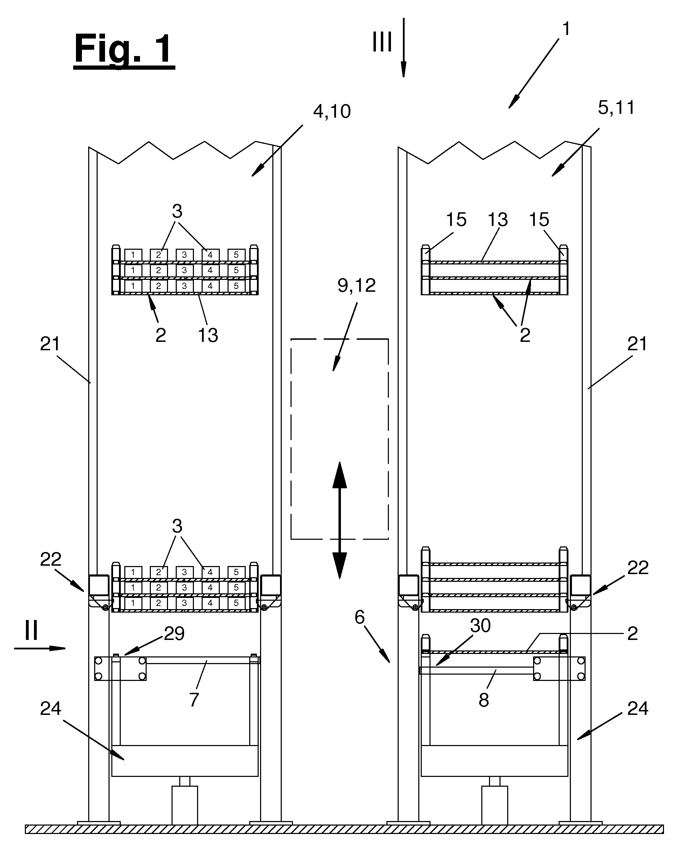

In der in Figur 1 gezeigten und bevorzugten Ausführungsform sind zwei Stapelvorrichtungen (4,5) vorhanden, die mit seitlichem Abstand nebeneinander angeordnet sind, wobei im Freiraum (12) zwischen ihnen eine Prozessvorrichtung (9) angeordnet ist. Die Stapelvorrichtungen (4,5) haben jeweils eine turmartige Gestalt mit einem Gestell (21) und einer Stützeinrichtung (22) für einen Trägerstapel. Ferner weisen sie jeweils eine Vereinzelungs- und Übergabevorrichtung (24) für einen äußeren, insbesondere unteren, Warenträger (2) im Trägerstapel auf. Die eine Stapelvorrichtung (5) nimmt z.B. beladene Warenträger (2) und die andere Stapelvorrichtung (4) leere Warenträger (2) auf.

Die Prozessvorrichtung (9) ist im gezeigten Ausführungsbeispiel als Ladevorrichtung ausgebildet, die Waren (3) einzeln oder bevorzugt gruppenweise von einem Förderer, z.B. einem Bandförderer, auf einen von der Transportvorrichtung (6) bereit gestellten Warenträger (2) umlädt. Der Warenträger (2) wird dadurch mit Waren (3) in einer vorzugsweise vorgegebenen Gruppenanordnung, insbesondere einer Reihenanordnung beladen. Der Ladevorgang kann auch umgekehrt verlaufen, wobei Waren (3) von einem Warenträger (2) auf den besagten Förderer umgeladen werden. Während des Ladevorgangs kann der Warenträger (2) getaktet bewegt werden. Beim Ladevorgang mit reihenweiser Umsetzung kann die Ladevorrichtung dadurch immer die gleiche Bewegung ausführen. Dies erleichtert die Steuerung und führt zu kurzen Wegen, hohen Geschwindigkeiten und sehr kurzen Zykluszeiten.

Auf dem Förderer können die ein oder mehreren Waren (3) kontinuierlich transportiert werden, wobei die Ladevorrichtung (9) einen Roboter mit einer zeitweise synchron zur Förderbewegung verfahrbaren Greifeinrichtung aufweisen kann, die ein Be- und Entladen on the fly ermöglicht. Die konstruktiven Einzelheiten des Ausführungsbeispiels sind der Übersicht halber nicht dargestellt.

Alternativ oder zusätzlich kann die Prozessvorrichtung (9) eine andere Ausbildung haben. Sie kann z.B. die auf einem Warenträger (2) befindlichen Waren (3) bearbeiten oder behandeln. Dies kann z.B. ein Bedrucken, ein Umsortieren oder dergleichen sein. Die Prozessvorrichtung (9) kann auch mehrere solcher Einzelvorrichtungen umfassen. Ferner kann die Prozessvorrichtung (9) an anderer Stelle und mit anderer räumlicher Zuordnung zu den Stapelvorrichtungen (4,5) angeordnet sein.

Die Transportvorrichtung (6) erstreckt sich über die vorgenannten Vorrichtungen (4,5,9) und verbindet diese miteinander. Sie reicht dabei in die Stapelvorrichtungen (4,5) hinein und ist z.B. unterhalb der Prozessvorrichtung (9) angeordnet. Im gezeigten Ausführungsbeispiel ist die Transportvorrichtung (6) an der Unterseite der Umstapeleinrichtung (1) angeordnet. Sie kann alternativ an anderer Stelle, insbesondere an der Oberseite und dabei ggf. auch oberhalb einer Prozessvorrichtung (9) angeordnet sein.

Die Transportvorrichtung (6) weist mehrere Transportmittel (7,8) mit Tragmitteln (29,30) auf, wobei die Transportmittel (7,8) ortsveränderlich und relativ zueinander bewegbar angeordnet und angetrieben sind. Die Tragmittel (29,30) dienen zum Transport und zur gegenseitigen Übergabe eines Warenträgers (2) und haben hierfür eine geeignete Ausbildung.

Die Transportmittel (7,8) sind eigenständig bewegbar und haben jeweils einen eigenständig steuerbaren Antrieb (35). Die Transportmittel (7,8) bewegen sich entlang einer bevorzugt geraden Bewegungsbahn, die durch eine geeignete Führung (27), z.B. eine Schienenführung definiert werden kann. Die Transportmittel (7,8) können in gleicher Bewegungsrichtung hintereinander oder gegensinnig aufeinander zu oder voneinander weg bewegt werden. Sie sind vorzugsweise verfahrbar an der Führung (27) angeordnet und abgestützt. Die Transportmittel (7,8) können kontinuierlich und/oder getaktet bewegt werden. Sie können insbesondere einander überlappende Bewegungsbahnen aufweisen, wobei sie sich aufeinander zubewegen und dabei zumindest mit ihren Tragmitteln (29,30) ineinander greifen und einander überlappen.

Die Transportmittel (7,8) haben jeweils eine über die Stapelvorrichtungen (4,5) und die Prozessvorrichtung (9) reichende Bewegungsbahn bzw. Führung (27). Sie können dabei eine gemeinsame Führung (27) oder getrennte Führungen haben. Vorzugsweise sind die Bewegungsbahn und die Führung (27) horizontal ausgerichtet.

Die Transportmittel (7,8) sind bevorzugt als Transportwagen ausgebildet, die ein Gestell mit einem Fahrwerk (28) und dem jeweiligen Tragmittel (29,30) aufweisen und entlang der Führung (27) rollen oder gleiten. Die Tragmittel (29,30) sind unterschiedlich ausgebildet und angeordnet, um bei einem Zusammenfahren der Transportmittel oder Transportwagen (7,8) ineinander greifen und einander überlappen zu können. Hierbei haben die Tragmittel (29,30) auch jeweils eine bewegliche und steuerbare Ausbildung, die ihnen in der Überlappstellung eine Übergabe eines Warenträgers (2) von einem zum anderen Transportmittel (7,8) ermöglicht. Zum anderen kann hierüber ggf. auch eine Übernahme oder Abgabe eines Warenträgers (2) an einer Stapelvorrichtung (4,5) realisiert werden.

Die Tragmittel (29,30) können für die Übergabe eine geeignete Verstellbarkeit aufweisen, wobei sie z.B. eine vertikale Hebe- und Senkbewegung ausführen. Es kann auch genügen, wenn nur ein Tragmittel (29,30) eine solche Verstellbarkeit, insbesondere Höhenverstellbarkeit aufweist. Für die konstruktive Ausgestaltung gibt es mehrere Variantionsmöglichkeiten.

In der gezeigten Ausführungsform von Figur 1 bis 17 bedienen beide Transportmittel (7,8) die Prozessvorrichtung (9) und können hier einen Warenträger (2) positionieren sowie vorbei bewegen. Das eine Transportmittel (7) bedient außerdem die in Figur 1 linke Stapelvorrichtung (4) und das andere Transportmittel (8) die rechte Stapelvorrichtung (5). Für einen Transport eines Warenträgers (2) von der einen zur anderen Stapelvorrichtung (4,5) erfolgt an geeigneter Stelle, insbesondere im Bereich der Prozessvorrichtung (9) eine Trägerübergabe zwischen den Transportmitteln (7,8).

In einer abgewandelten Ausführungsform können die Transportmittel (7,8) auch beide Stapelvorrichtungen (4,5) bzw. Stapelzonen (10,11) anfahren und bedienen. Dies erlaubt z.B. bei Ausfall eines Transportmittels (7,8) eine Fortsetzung des Transportbetriebs mit verminderter Leistungsfähigkeit durch das andere Transportmittel (7,8).

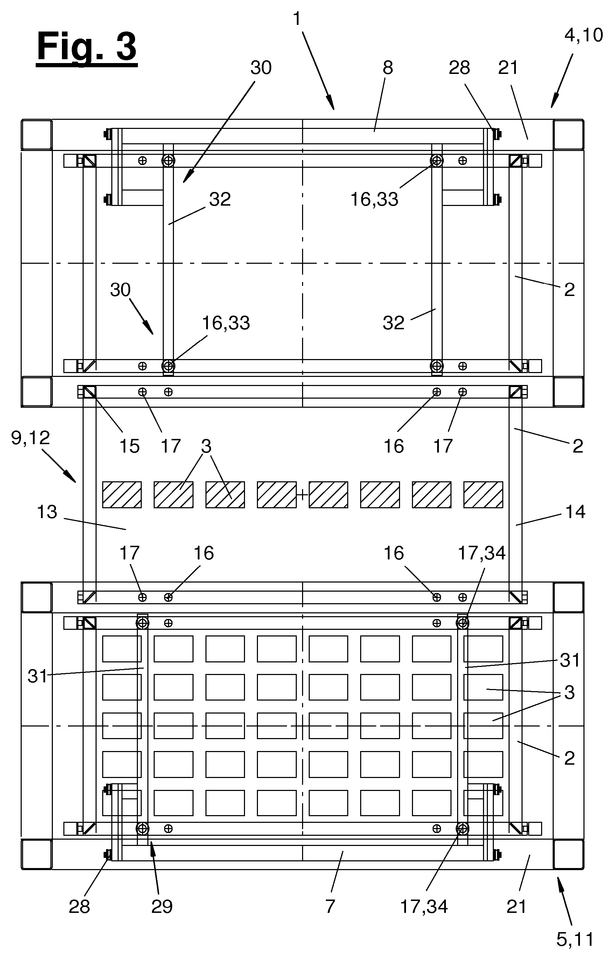

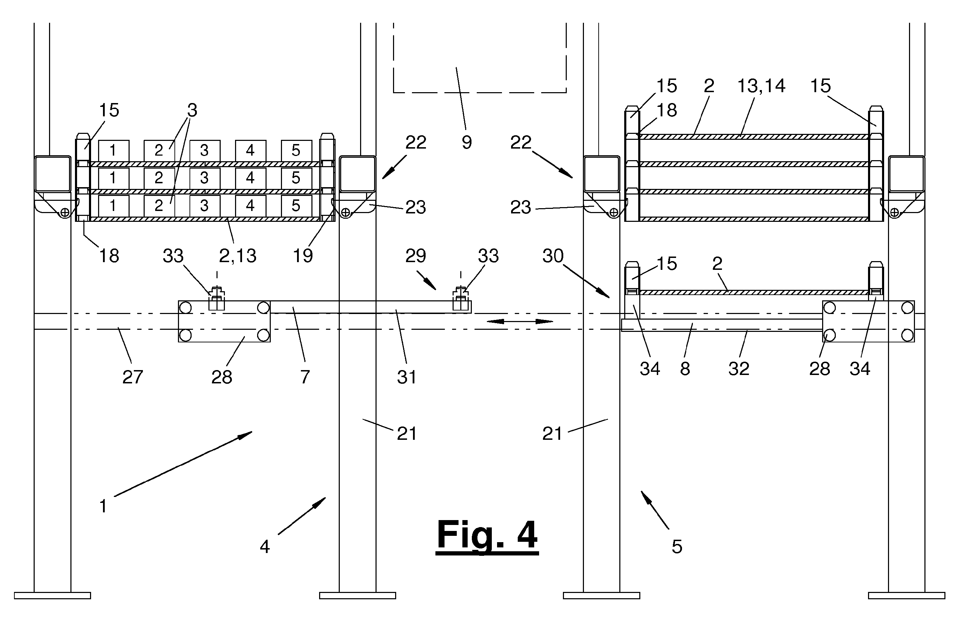

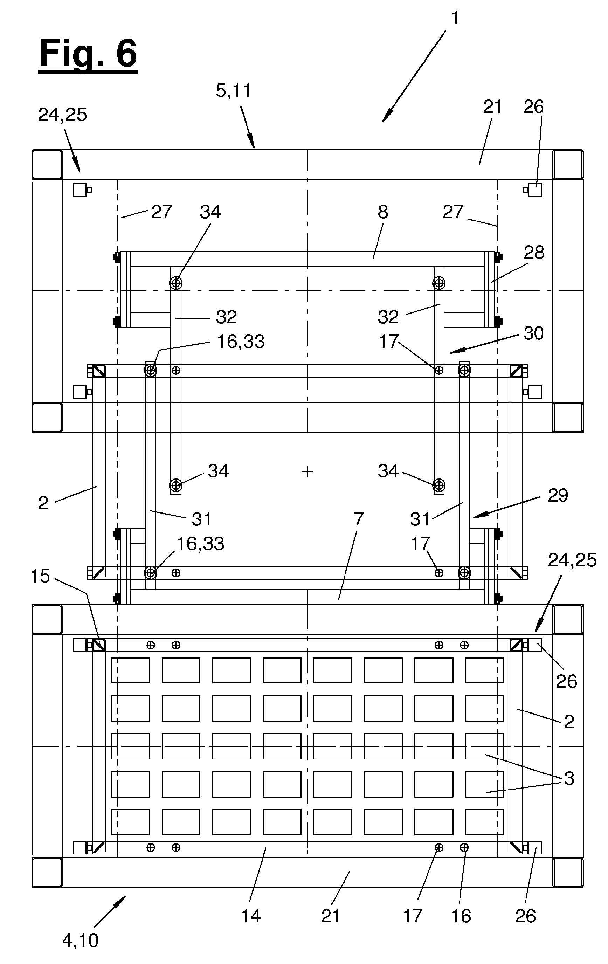

Wie Figur 3 und 6 in der Draufsicht verdeutlichen, weisen die Tragmittel (29,30) jeweils einen oder mehrere, bevorzugt jeweils zwei, Tragarme (31,32) mit Tragelementen (33,34) auf, welche einen Warenträger (2) in definierter Lage aufnehmen und ggf. abgeben können. Die Tragarme (31,32) sind in Bewegungsrichtung bzw. längs der Bewegungsbahn oder Führung (27) ausgerichtet. Die Transportmittel (7,8) bzw. deren Tragmittel (29,30) weisen hierbei unterschiedlich angeordnete und gegeneinander gerichtete Tragarme (31,32) auf, die einander bei gegenseitiger Annäherung der Transportmittel (7,8) überlappen können. Die Tragarme (31) haben z.B. einen größeren Abstand als die Tragarme (32) und können diese in der Überlappstellung außenseitig umgreifen. Die Tragarme (31,32) können außerdem in unterschiedlichen Höhenlagen angeordnet sein, wie dies Figur 1 und die vergrößerte Detaildarstellung von Figur 4 in einer Seitenansicht zeigen.

Die Trageelemente (33,34) können mit entsprechend angeordneten Aufnahmen (16,17) am Warenträger (2) zusammenwirken und hier bevorzugt formschlüssig angreifen oder eingreifen. Die Tragelemente (33,34) sind hierfür entsprechend beweglich, vorzugsweise höhenverstellbar.

Die Höhenverstellung der Tragmittel (29,30) lässt sich unterschiedlich realisieren. In der gezeigten Variante sind die Tragelemente (33,34) als ausfahrbare Tragzapfen ausgebildet, die heb- und senkbar an den Tragarmen (31,32) angeordnet sind und entsprechende steuerbare Hubantriebe aufweisen. In einer anderen, nicht dargestellten Variante können die Tragarme (31,32) gegenüber den anderen Gestellteilen oder dem Fahrwerk (28) höhenverstellbar sein. Es ist auch möglich, ein Transportmittel (7,8) oder seine Führung (27) in der Höhe zu verstellen.

Gemäß Figur 3 und 6 weist jedes Tragmittel (29,30) jeweils vier im Rechteck angeordnete Tragelemente (33,34) auf, wobei jeder Warenträger (2) entsprechend angeordnete Aufnahmen (16,17) besitzt. Diese sind z.B. als Einstecköffnungen an der Unterseite des Warenträgers (2), insbesondere an den Längsseiten des Trägerrahmens (14) ausgebildet.

Entsprechend der Tragarme (31,32) haben auch die Tragelemente (33,34) und die zugehörigen Aufnahmen (16,17) eine gegenseitig versetzte Anordnung, sodass eine Überlappstellung möglich ist und in der Überlappposition auch alle Tragelemente (33,34) gemeinsam an den Aufnahmen (16,17) und an einem Warenträger (2) angreifen können. Durch die eigenständig gesteuerte Beweglichkeit der Tragelemente (33,34) und deren Hubantrieben kann der Warenträger (2) von einem Tragmittel (29) an das andere Tragmittel (30) übergeben werden.

Die Trageelemente (33,34) können an die ggf. unterschiedlichen Höhenlagen der Tragarme (31,32) angepasst sein und eine unterschiedliche Länge aufweisen. In den gezeigten Ausführungsformen sind die Tragelemente (33,34) jeweils als ausfahrbare Tragzapfen mit einer konischen Spitze ausgebildet, wobei die Aufnahmen (16,17) als passende Konusöffnungen gestaltet sind.

Wie Figur 3 und 6 verdeutlichen sind die Aufnahmen (16,17) von den Eckbereichen und den dortigen Trägerpfosten (15) der Warenträger der Warenträger (2) distanziert angeordnet. Dies ermöglicht einen Angriff der Stützeinrichtung (22) und der Vereinzelungs- und Übergabevorrichtung (24) an anderer Stelle und parallel zu den Tragmitteln (29,30). Hierüber kann eine Übergabe und Übernahme von Warenträgern (2) an den Stapelvorrichtungen (4,5) realisiert werden. Außerdem kann innerhalb der Stapelvorrichtungen (4,5) eine Übergabe der Warenträger (2) zwischen einer Stützeinrichtung (22) und einer Vereinzelungs- und Übergabevorrichtung (24) erfolgen.

Wie Figur 1 in der Übersicht und Figur 4 in einer vergrößerten Detaildarstellung zeigen, weist die am Gestell (21) angeordnete Stützeinrichtung (22) Stapelhalter (23) auf, die mit dem untersten Warenträger (2) im Trägerstapel in formschlüssigem Eingriff treten und diesen Warenträger (2) mitsamt den darauf ruhenden Trägerstapel halten und stützen sowie ggf. positionieren. Die Stapelhalter (23) können z.B. als schwenkbar am Gestell (21) gelagerte Tragfinger ausgebildet sein, die mit einer geeigneten Aufnahem oder Stützstelle (19) am Warenträger (2) in Eingriff treten. In Stützstellung können sie sich am Gestell (22) abstützen und ihre Drehstellung sichern. Ein Öffnen und Lösen der Stapelhalter (23) ist durch die Vereinzelungs- und Übergabevorrichtung (24) möglich, die hierzu mit der Stützeinrichtung (22) kooperiert.

Ein Warenträger (2) kann mehrere Stützstellen oder Aufnahmen (19) aufweisen, die z.B. an den Eckbereichen und den dortigen Trägerpfosten (15) angeordnet sind. Die Aufnahmen (19) können als seitliche Öffnungen im Mantel von zylinderförmigen und innenseitig hohlen Trägerpfosten (15) ausgebildet sein. Die Stützeinrichtung (22) weist dementsprechend vier Stapelhalter (23) auf. Die Stapelhalter (23) können durch einen Antrieb oder über ihr Eigengewicht bzw. den Trägerstapel betätigt werden.

Die Vereinzelungs- und Übergabevorrichtung (24) dient zur Übernahme und Abgabe von einzelnen Warenträgern (2) von und an ein Transportmittel (7,8) sowie zur Entnahme und Zuführung von einzelnen Warenträgern (2) an der Stapelvorrichtung (4,5). Die Vereinzelungs- und Übergabevorrichtung (24) weist hierfür eine geeignete konstruktive Ausbildung auf, die in unterschiedlicher Weise ausgeführt sein kann.

In den gezeigten Ausführungsbeispielen besitzt die Vereinzelungs- und Übergabevorrichtung (24) eine steuerbare Hubeinrichtung (25), die z.B. ein Gestell mit einem darunter angeordneten Antrieb, insbesondere einem Zylinder, und nach oben abstehenden Hubfingern (26) aufweist. Die Hubfinger (26) greifen an geeigneten Stellen des Warenträgers (2), z.B. an den Eckbereichen und an den Trägerpfosten (15) an, wobei sie in entsprechender Zahl und Verteilung angeordnet sind. Der Warenträger (2) besitzt hierfür geeignete Aufnahme oder Stützstellen (20), die z.B. als außenseitige Ansätze an den Trägerpfosten (15) ausgebildet sind. Die oberen Enden der Hubfinger (26) können eine zentrierende Gestaltung haben und außerdem einen Fortsatz besitzen, mit dem sie in Eingriffstellung die Stapelhalter (23) betätigen und lösen, sodass der Trägerstapel dann auf den Hubfingern (26) ruht und bei deren Hebe- oder Senkbewegung mitbewegt werden kann.

Die Vereinzelungs- und Übergabevorrichtung (24) kann ansonsten in beliebig anderer geeigneter Weise mit der Stützeinrichtung (22) kooperieren und für eine Vereinzelung und Übernahme oder Zuführung des äußersten bzw. untersten Warenträgers (2) im Trägerstapel sorgen. Die vorgenannte Betätigung der Stapelhalter (23) erfolgt bei Eingriff der Hubvorrichtung (25) am untersten Warenträger (2). Sobald die Hubvorrichtung (25) weiter absenkt und den Kontakt mit den Stapelhaltern (23) verliert, fallen diese wieder ein und halten den Trägerstapel fest. Der an der Hubvorrichtung (25) aufgenommene Warenträger (2) wird dadurch von dem Trägerstapel gelöst und vereinzelt. Er kann dann ein Stück weiter nach unten in eine Zwischenstellung bewegt werden, in der eine Übergabe an ein Transportmittel (7,8) und dessen Tragmittel (29,30) möglich ist. Das Tragmittel (29,30) kann zwischen die Hubfinger (26) greifen, wobei die Übergabe durch eine vertikale Relativbewegung zwischen den Tragelementen (33,34) und der Hubvorrichtung (25) erfolgt.

In umgekehrter Kinematik kann die Hubvorrichtung (25) einen von einem Transportmittel (7,8) bereit gehaltenen Warenträger (2) durch eine entgegengesetzte vertikale Relativbewegung übernehmen und mit einer weiteren Aufwärtsbewegung an den von der Stützeinrichtung (22) gehaltenen Trägerstapel heranführen und dort über die Aufnahmen (18) in Eingriff bringen. Durch eine fortgesetzte Hubbewegung wird der gesamte Trägerstapel angehoben, wobei die z.B. einseitig wirkende Stützeinrichtung (22) gelöst wird und nach Erreichen einer Endposition an dem neu zugeführten untersten Warenträger (2) wieder eingreift.

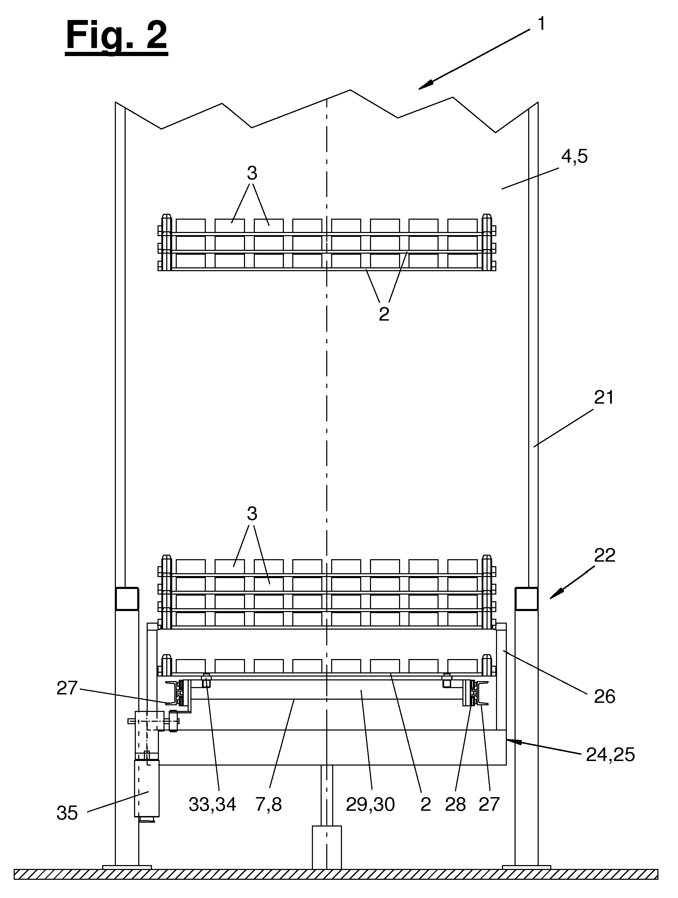

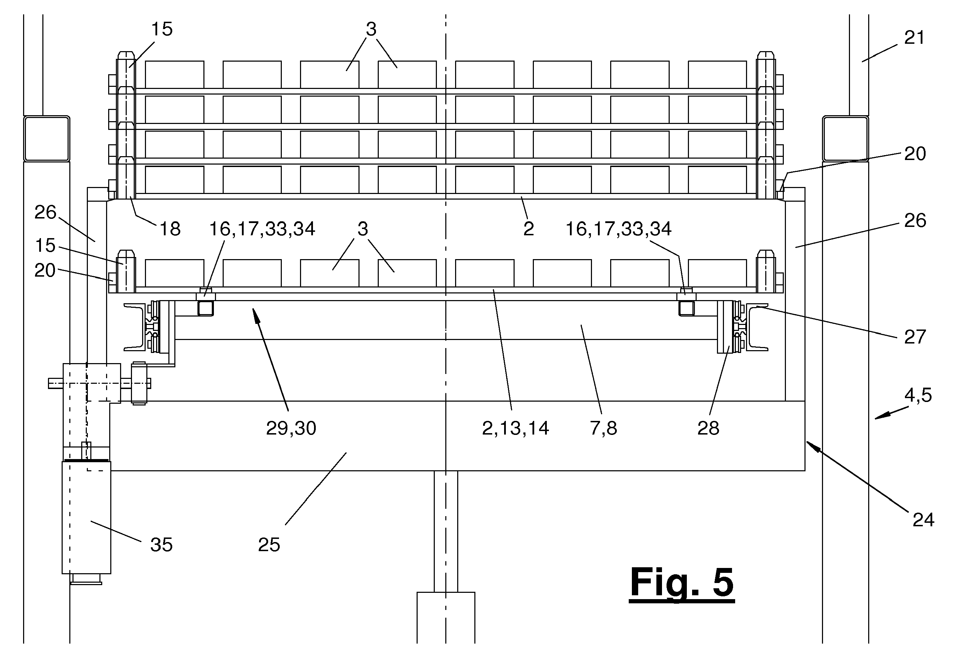

Figur 2 und 5 zeigen dieses Zusammenwirken der Hubvorrichtung (25) mit dem Trägerstapel, wobei das Transportmittel (7,8) schon wieder aus dem Eingriffsbereich der Hubvorrichtung (25) herausbewegt ist. Die Stützeinrichtung (22) ist in Figur 2 und 5 nicht dargestellt und nur durch einen Pfeil angedeutet. In Figur 4 ist andererseits nur die Stützeinrichtung (22), aber nicht die Hubeinrichtung (25) dargestellt. Die vorgeschriebenen Funktionen der Hubeinrichtung (25) und der Hubfinger (26) gelten entsprechend auch für andere konstruktive Ausgestaltungen einer Vereinzelungs- und Übergabevorrichtung (24) bzw. einer Stützeinrichtung (22).

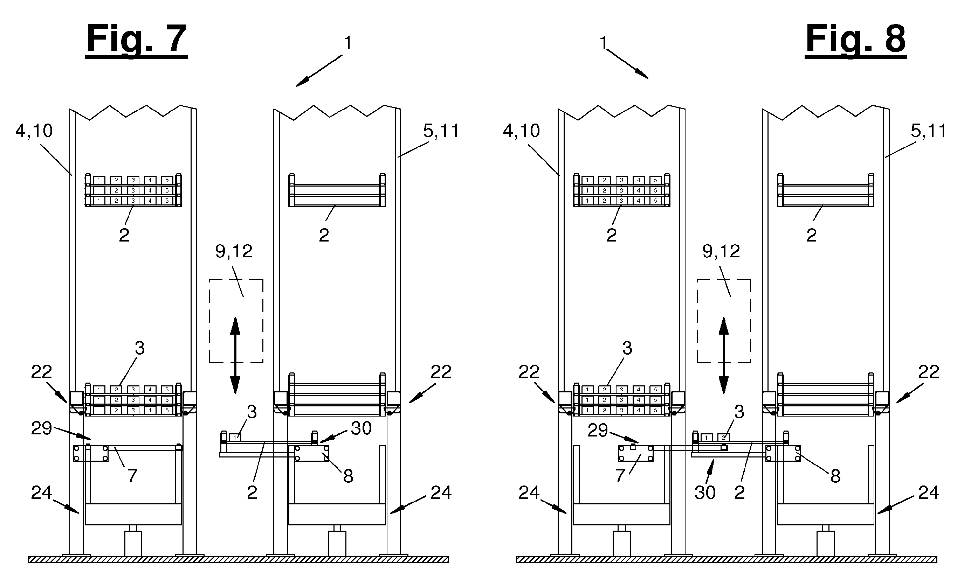

Figur 7 bis 17 verdeutlichen einen Betriebsablauf in mehreren Schritten. Bei Figur 1 hat das rechte Transportmittel (8) einen leeren Warenträger (2) von der Stapelvorrichtung (5) übernommen und in eine Position unterhalb der Prozessvorrichtung (9) bewegt, die dann auf dem Warenträger (2) eine erste Warenreihe (3) abgelegt hat. Das andere Transportmittel (7) befindet sich in einer momentan funktionslosen Stellung im Bereich der anderen Stapelvorrichtung (4).

Im nächsten Schritt von Figur 8 wird das Transportmittel (8) getaktet um ein Stück weiter nach links zur Aufnahme der nächsten Warenreihe (3) bewegt. Das andere Transportmittel (7) hat sich inzwischen in Gegenrichtung und zu dem Transportmittel (8) hinbewegt. Sein Tragmittel (29) ist deaktiviert bzw. abgesenkt und kann den am aktivierten anderen Tragmittel (30) in erhabener Position gehaltenen Warenträger (2) unterfahren.

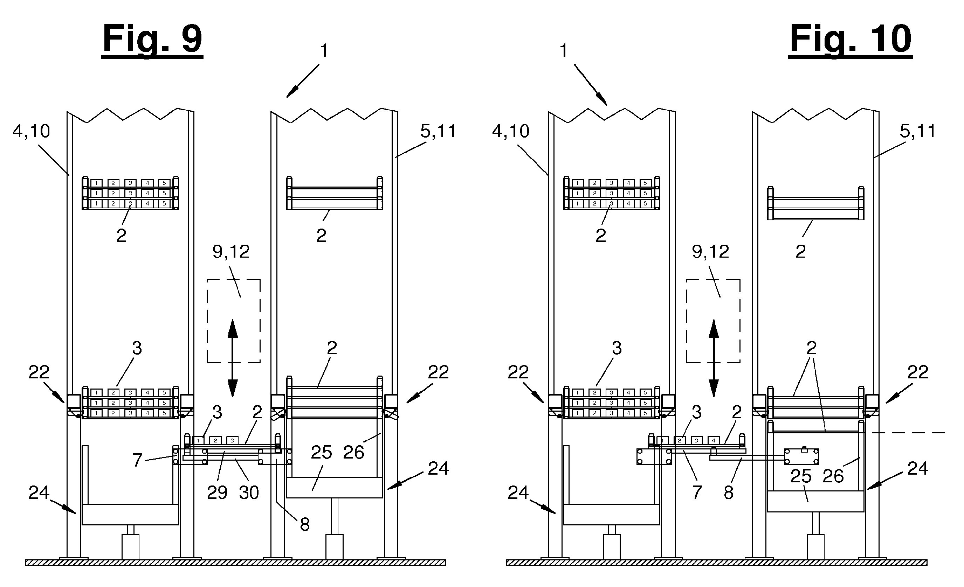

Bei der nächsten Position von Figur 9 hat sich das Transportmittel (8) einen weiteren Taktschritt nach links zur Aufnahme einer dritten Warenreihe bewegt, wobei die beiden Transportmittel (7,8) nun eine gegenseitige Überlappstellung einnehmen, in der das momentan noch deaktivierte Tragmittel (29) in einer übernahmegerechten Position unterhalb des noch vom Transportmittel (8) gehaltenen Warenträgers (2) positioniert ist.

Aus der in Figur 9 gezeigten Überlappstellung heraus wird dann bei momentan stehenden oder alternativ synchron bewegten Transportmitteln (7,8) das Tragmittel (29) aktiviert, wobei seine Tragelemente (33) ausfahren, in die Aufnahmen (16) des Warenträgers (2) greifen und diesen stützen. Zugleich oder anschließend kann das Tragmittel (30) durch Absenken seiner Tragelemente (34) deaktiviert und außer Eingriff mit dem Warenträger (2) gebracht werden. Die weitere prozessgerechte Bewegung des Warenträgers (2) gegenüber der Prozesseinrichtung (9) wird dann durch das Transportmittel (7) bewirkt, wobei z.B. gemäß Figur 10 die nächste Warenreihe aufgelegt wird. Das nunmehr vom Warenträger (2) gelöste Transportmittel (8) kann leer zur Stapelvorrichtung (5) zurückfahren. Hier hat gemäß Figur 10 die Vereinzelungs- und Übergabevorrichtung (24) in der Zwischenzeit den untersten Warenträger (2) aus dem Trägerstapel aufgenommen, vereinzelt und in eine Zwischenposition transportiert, die durch eine gestrichelte Querlinie kenntlich gemacht ist.

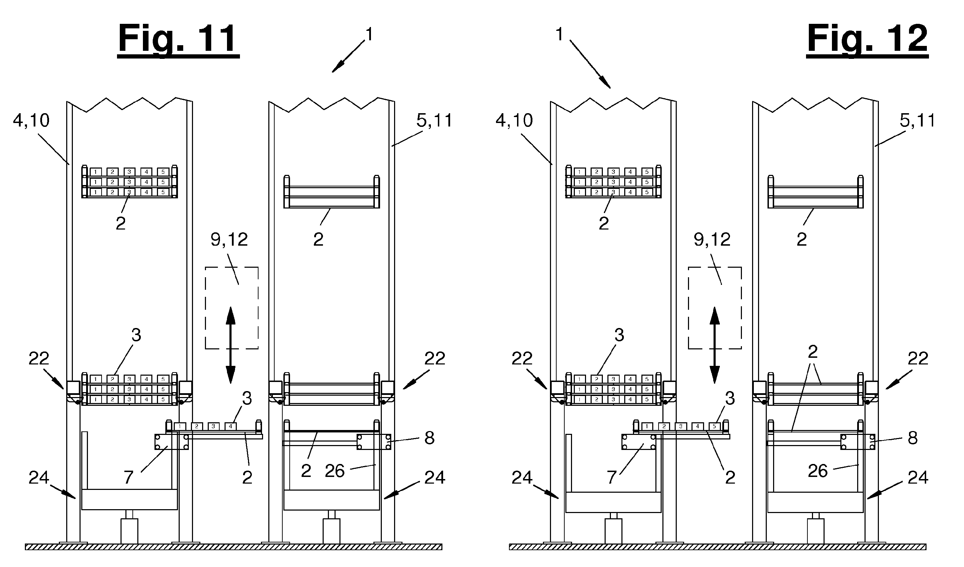

Im nächsten Schritt von Figur 11 übernimmt das beretstehende Transportmittel (8) den vereinzelten leeren Warenträger (2) von der zu diesem Zeck abgesenkten Vereinzelungs- und Übergabevorrichtung (24). Das andere Transportmittel (7) ist noch mit der Ladetätigkeit an der Prozesseinrichtung (9) bzw. in der Prozesszone (12) beschäftigt.

Im Folgeschritt von Figur 12 hat die Prozessvorrichtung (9) gerade die letzte Warenreihe (3) auf dem vom Transportmittel (7) gehaltenen Warenträger (2) abgelegt, der nun fertig befüllt ist. Das Transportmittel (8) hat den neuen leeren Warenträger (2) übernommen und bewegt sich nun zur Prozesszone (12) hin, wobei der leere Warenträger (2) unmittelbar anschließend an den beladenen Warenträger (2) positioniert wird.

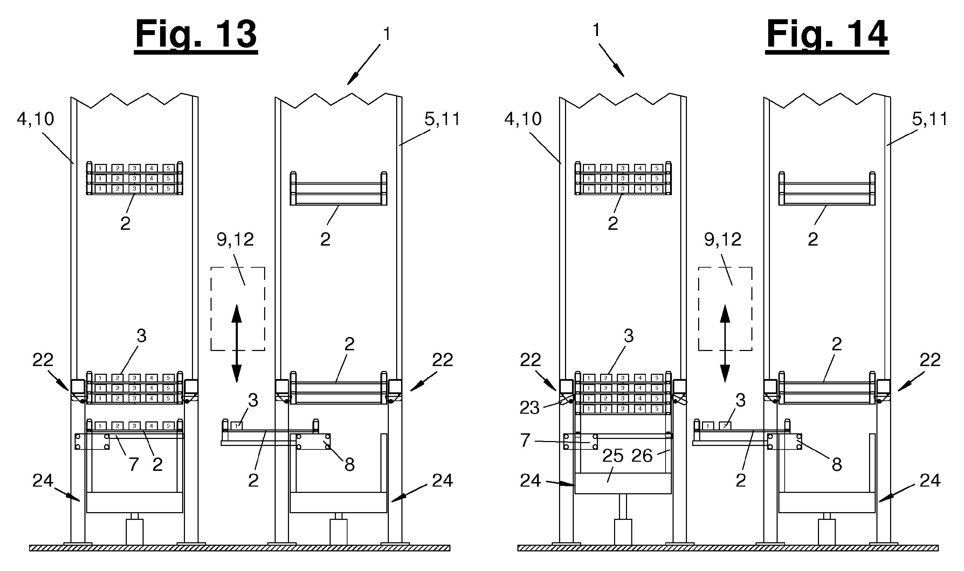

Figur 13 zeigt den nächsten Schritt, in dem die Prozessvorrichtung (9) den leeren Warenträger (2) am Transportmittel (8) zu beladen beginnt, wobei das Transportmittel (7) mit dem vollen Warenträger (2) in einer Übergabeposition an der Stapelvorrichtung (4) gefahren ist. Hier ist die Vereinzelungs- und Übergabevorrichtung (24) in einer übernahmegerechten Stellung positioniert und steht zur Aufnahme des beladenen Warenträgers (2) bereit.

Im Folgeschritt von Figur 14 übernimmt die Vereinzelungs- und Übergabevorrichtung (24) den beladenen Warenträger (2), hebt ihn an und bringt ihn mit dem momentan untersten Warenträger (2) im Trägerstapel in Eingriff. Anschließend wird der Trägerstapel angehoben und die Stützeinrichtung (22) deaktiviert. Figur 14 zeigt, wie hierbei durch die Aufwärtsbewegung des Trägerstapels die Stapelhalter (23) an ihren schrägen Vorderseiten mitgenommen, gedreht und außer Eingriff gebracht werden. Am anderen Transportmittel (8) wird in der Zwischenzeit der Ladeprozess fortgesetzt.

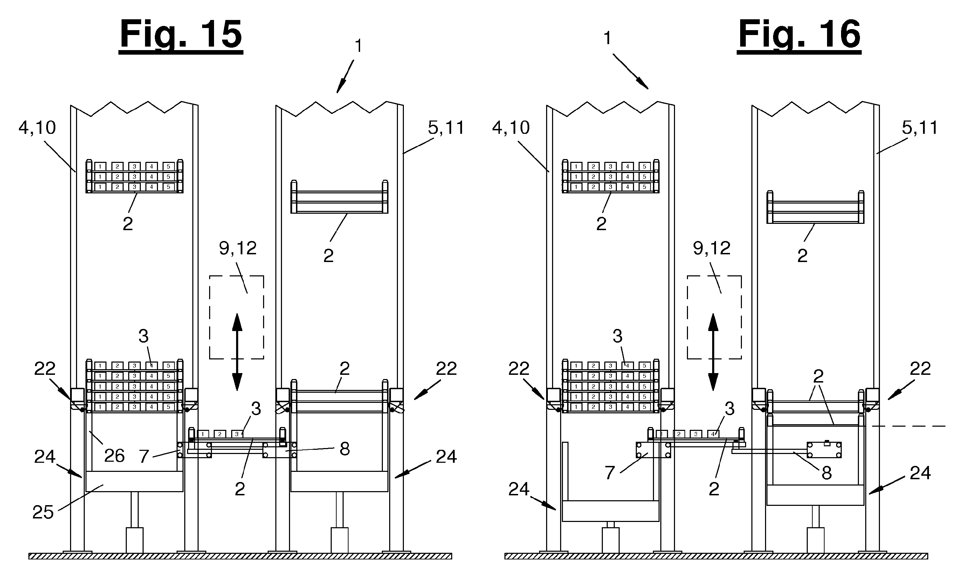

Figur 15 zeigt den nächsten Schritt, in dem das geleerte Transportmittel (7) zur Prozesszone (12) zurückbewegt und in Überlappstellung mit dem Transportmittel (8) gebracht wird. Außerdem ist an der Stapelvorrichtung (4) die Stützeinrichtung (22) wieder aktiviert worden und hält den Trägerstapel fest. An der anderen Stapelvorrichtung (5) hat die Vereinzelungs- und Übergabevorrichtung (24) in der Zwischenzeit den nächsten unteren Warenträger (2) im Stapel vereinzelt und aufgenommen.

Figur 16 zeigt den Folgeschritt, in dem das Transportmittel (7) in der in Figur 9 vorbeschriebenen Weise den teilweise beladenen Warenträger (2) übernommen hat und das leere Transportmittel (8) zu der Stapelvorrichtung (5) und dem dort in der Zwischenposition bereitgehaltenen nächsten einzelnen Warenträger (2) zurückkehrt.

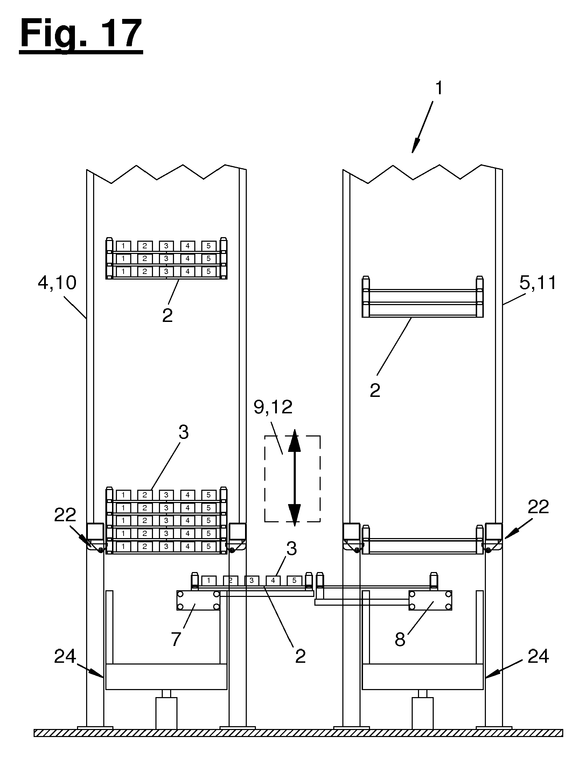

Gemäß Folgeschritt von Figur 17 übernimmt dann das Transportmittel (8) wieder den leeren Warenträger (2), wobei hier auch die direkte Anschlussposition an den gerade fertig beladenen Warenträger (2) auf dem Transportmittel (7) dargestellt ist. Der vorbeschriebene Zyklus beginnt dann von Neuem.

Varianten der vorbeschriebenen Betriebsweise sind in verschiedener Weise möglich. Die Ladezuordnung kann umgekehrt sein, wobei die linke Stapelvorrichtung (4) leere Warenträger (2) und die rechte Stapelvorrichtung (5) volle Warenträger (2) aufnimmt. Der vorbeschriebene Zyklus läuft dann in umgekehrter Reihenfolge ab. Eine solche kinematische Umkehr findet außerdem statt, wenn bei dem gezeigten Ausführungsbeispiel die in der Umstapeleinrichtung (1) eingelagerten und zwischengespeicherten Waren (3) wieder ausgelagert werden. In diesem Fall übernimmt das Transportmittel (7) beladene Warenträger (2) von der Stapelvorrichtung (4) bzw. von der Vereinzelungs- und Übergabevorrichtung (24) und bewegt diese in die Prozesszone (12), wobei der Warenträger (2) hier z.B. von der Prozessvorrichtung (9) entladen wird. Während dieses Prozesses übernimmt das andere Transportmittel (8) den teilweise entladenen Warenträger (2) und setzt den Entladevorgang fort, wobei das leere Transportmittel (7) für die Übernahme eines nächsten beladenen Warenträgers (2) zur Stapelvorrichtung (4) zurückkehrt. Das Transportmittel (8) übergibt den geleerten Warenträger (2) seinerseits wieder in der vorbeschriebenen Weise an die zugeordnete Stapelvorrichtung (5).

Bei den gezeigten Ausführungsbeispielen erfolgt das Einlagern und Auslagern von Warenträgern (2) und Waren (3) in jeweils umgekehrter Reihenfolge. Wenn ein First in-First out-Prinzip verfolgt werden soll, kann die Umstapeleinrichtung (1) mehrfach vorhanden sein oder sie kann ein oder mehrere weitere Paare von Stapelvorrichtungen (4,5) aufweisen, die quer zur Zeichenebene vor oder hinter den gezeigten Stapelvorrichtungen (4,5) angeordnet sind, wobei eine Umlagerung beladener Warenträger (2) zwischen diesen Paarungen in einer Richtung quer zur Zeichenebene und bevorzugt an der Oberseite der jeweiligen Trägerstapel stattfindet. Hierüber wird die Stapelreihenfolge der Warenträger (2) und der darin befindlichen Waren (3) umgedreht. Die zuerst an der einen Vorrichtungspaarung eingelagerten Warenträger (2) stehen an der anderen Vorrichtungspaarung dann als erste wieder zur Auslagerung und zur Entladung zur Verfügung. Für die andere Paarung von Stapelvorrichtungen (4,5) kann eine weitere Transportvorrichtung (6) der vorbeschriebenen Art zur Verfügung stehen.

Abwandlungen der gezeigten und beschriebenen Ausführungsbeispiele sind in verschiedener Weise möglich. Die konstruktive Ausbildung der Transportmittel (7,8), ihre Führung und Lagerung sowie ihre Antriebstechnik sowie auch die Ausbildung der Tragmittel (29,30) kann variieren. Die an unterschiedlichen Stellen der Warenträger (2) angeordneten Aufnahmen (16,17,18,19,20) können in der Ausbildung und Anordnung verändert werden, wobei insbesondere auch eine Vertauschung stattfinden kann.

### BEZUGSZEICHENLISTE

- 1: Umstapeleinrichtung
- 2: Warenträger, Tray
- 3: Ware, Stückgut, Dose
- 4: Stapelvorrichtung für leere Warenträger
- 5: Stapelvorrichtung für volle Warenträger
- 6: Transportvorrichtung
- 7: Transportmittel, Transportwagen
- 8: Transportmittel, Transportwagen
- 9: Prozessvorrichtung, Ladeeinrichtung
- 10: Stapelzone
- 11: Stapelzone
- 12: Prozesszone, Freiraum
- 13: Trägerboden
- 14: Trägerrahmen
- 15: Trägerstütze, Trägerpfosten
- 16: Aufnahme für Transportmittel
- 17: Aufnahme für Transportmittel
- 18: Stützstelle, Aufnahme für Nachbarpfosten
- 19: Stützstelle, Aufnahme für Stapelhalter
- 20: Stützstelle, Aufnahme für Hubfinger
- 21: Gestell
- 22: Stützeinrichtung
- 23: Stapelhalter
- 24: Vereinzelungs- und Übergabevorrichtung
- 25: Hubeinrichtung
- 26: Hubfinger
- 27: Führung, Bewegungsbahn für Transportmittel
- 28: Fahrwerk
- 29: Tragmittel
- 30: Tragmittel
- 31: Gestellteil, Tragarm
- 32: Gestellteil, Tragarm
- 33: Tragelement, Tragzapfen ausfahrbar
- 34: Tragelement, Tragzapfen ausfahrbar
- 35: Antrieb

## Patentansprüche

1. Umstapeleinrichtung für Warenträger (2) mit mehreren mit Abstand nebeneinander angeordneten Stapelvorrichtungen (4,5) zur Aufnahme und Handhabung von jeweils mindestens einem Warenträgerstapel und einer dazwischen angeordneten Prozesszone (12) für Waren (3) sowie einer die Stapelvorrichtungen (4,5) und die Prozesszone (12) verbindenden Transportvorrichtung (6) mit einem Transportmittel (7,8) für Warenträger (2), **dadurch gekennzeichnet, dass** die Transportvorrichtung (6) mehrere zwischen den Stapelvorrichtungen (4,5) und der Prozesszone (12) sowie relativ zueinander mit einander überlappenden Bewegungsbahnen bewegbare Transportmittel (7,8) aufweist, wobei die Transportmittel (7,8) Tragmittel (29,30) aufweisen, die zum Transport und zur gegenseitigen Übergabe eines Warenträgers (2) zwischen den Transportmitteln (7,8) ausgebildet sind.

2. Umstapeleinrichtung nach Anspruch 1, **dadurch gekennzeichnet, dass** in der Prozesszone (12) eine Prozessvorrichtung (9), insbesondere eine Ladevorrichtung zum Beladen und/oder Entladen von Waren (3) auf einem Warenträger (2) angeordnet ist.

3. Umstapeleinrichtung nach Anspruch 1 oder 2, **dadurch gekennzeichnet, dass** die Transportmittel (7,8) eigenständig bewegbar, insbesondere verfahrbar, sind, wobei sie kontinuierlich und/oder getaktet bewegbar sind und jeweils einen eigenständig steuerbaren Antrieb (35) aufweisen.

4. Umstapeleinrichtung nach Anspruch 2 oder 3, **dadurch gekennzeichnet, dass** die Transportmittel (7,8) jeweils eine über die Stapelvorrichtungen (4,5) und die Prozessvorrichtung (9) reichende Bewegungsbahn aufweisen und jeweils als Transportwagen mit einer gemeinsamen Führung (27) ausgebildet sind.

5. Umstapeleinrichtung nach einem der vorhergehenden Ansprüche, **dadurch gekennzeichnet, dass** die Transportmittel (7,8) unterschiedliche und einander überlappungsfähige Tragmittel (29,30) aufweisen, die jeweils beweglich und steuerbar, insbesondere höhenverstellbar, sind.

6. Umstapeleinrichtung nach einem der vorhergehenden Ansprüche, **dadurch gekennzeichnet, dass** ein Tragmittel (29,30) einen oder mehrere Tragarme (31,32) mit einem oder mehreren an einer Aufnahme (16,17) am Warenträger (2) angreiffähigen Tragelementen (33,34) aufweist, wobei ein Tragelement (33,34) als gesteuert beweglicher, insbesondere ausfahrbarer Tragzapfen mit einem Hubantrieb, ausgebildet ist.

7. Umstapeleinrichtung nach einem der vorhergehenden Ansprüche, **dadurch gekennzeichnet, dass** die Transportmittel (7,8) in Bewegungsrichtung des Transportmittels (7,8) ausgerichtete Tragarme (31,32) aufweisen, die gegeneinander gerichtet sind und einander überlappen.

8. Umstapeleinrichtung nach einem der vorhergehenden Ansprüche, **dadurch gekennzeichnet, dass** die Stapelvorrichtungen (4,5) ein Gestell (21) mit einer Stützeinrichtung (22) für einen Stapel von Warenträgern (2) und eine Vereinzelungs- und Übergabevorrichtung (24) für einen äußeren, insbesondere unteren, Warenträger (2) im Stapel aufweisen.

9. Umstapeleinrichtung nach Anspruch 8, **dadurch gekennzeichnet, dass** die Vereinzelungs- und Übergabevorrichtung (24) zur Übernahme und Abgabe von einzelnen Warenträgern (2) von und an einem Transportmittel (7,8) ausgebildet ist, wobei die Vereinzelungs- und Übergabevorrichtung (24) mit der Stützeinrichtung (22) kooperiert.

10. Umstapeleinrichtung nach einem der Ansprüche 8 oder 9, **dadurch gekennzeichnet, dass** die Vereinzelungs- und Übergabevorrichtung (24) eine Hubeinrichtung (25) mit mehreren relativ zu den Transportmitteln (7,8) beweglichen Hubfingern (26) aufweist.

11. Umstapeleinrichtung nach einem der vorhergehenden Ansprüche, **dadurch gekennzeichnet, dass** ein Warenträger (2) mehrere unterschiedlich positionierte Aufnahmen (16,17) für die Tragmittel (29,30) und mehrere Aufnahmen (19,20) für eine Stützeinrichtung (22) und eine Vereinzelungs- und Übergabevorrichtung (24) einer Stapelvorrichtung (4,5) aufweist.

12. Verfahren zum Umstapeln von Warenträgern (2) zwischen mehreren mit Abstand nebeneinander angeordneten Stapelzonen (10,11) zur Aufnahme und Handhabung von jeweils mindestens einem Warenträgerstapel und einer dazwischen angeordneten Prozesszone (12) für Waren (3), wobei die Warenträger (2) mittels einer die Zonen (10,11,12) verbindenden Transportvorrichtung (6) mit einem Transportmittel (7,8) transportiert werden, **dadurch gekennzeichnet, dass** ein Warenträger (2) von mehreren zwischen den Stapelvorrichtungen (4,5) und der Prozesszone (12) sowie relativ zueinander mit einander überlappenden Bewegungsbahnen bewegten Transportmitteln (7,8) mit Tragmitteln (29,30) transportiert wird, wobei der Warenträger (2) zwischen den Transportmitteln (7,8) übergeben wird.

13. Verfahren nach Anspruch 12, **dadurch gekennzeichnet, dass** der Warenträger (2) zwischen den Transportmitteln (7,8) im Bereich der Prozesszone (12) übergeben wird.

14. Verfahren nach Anspruch 12 oder 13, **dadurch gekennzeichnet, dass** in der Prozesszone (12) mit einer dortigen Prozessvorrichtung (9) ein oder mehrere Prozesse an oder mit den Waren (3) durchgeführt werden.

15. Verfahren nach Anspruch 12, 13 oder 14, **dadurch gekennzeichnet, dass** in der Prozesszone (12) mit einer dortigen, als Ladevorrichtung ausgebildeten Prozessvorrichtung (9) Waren (3) einzeln oder gruppenweise zwischen einem Förderer und einem von der Transportvorrichtung (6) bereit gestellten Warenträger (2) umgeladen werden.

## Claims

1. Restacking arrangement for article carriers (2), having a plurality of stacking apparatuses (4, 5), which are spaced apart one beside the other and are intended for receiving and handling in each case at least one article-carrier stack, and having a process zone (12) for articles (3), said process zone being arranged between said stacking apparatuses, and having a transporting apparatus (6), which connects the stacking apparatuses (4, 5) and the process zone (12) and has a transporting means (7, 8) for article carriers (2), **characterized in that** the transporting apparatus (6) has a plurality of transporting means (7, 8), which can be moved between the stacking apparatuses (4, 5) and the process zone (12) and relatively to one another by way of overlapping movement paths, wherein the transporting means (7, 8) have carrying means (29, 30), which are designed for transporting an article carrier (2) and for transferring the same between the transporting means (7, 8).

2. Restacking arrangement according to Claim 1, **characterized in that** a process apparatus (9), in particular a loading apparatus for loading and/or unloading articles (3) on an article carrier (2), is arranged in the process zone (12).

3. Restacking arrangement according to Claim 1 or 2, **characterized in that** the transporting means (7, 8) can be moved, in particular displaced, independently, wherein they can be moved in a continuous and/or cyclic manner and each have an independently controllable drive (35).

4. Restacking arrangement according to Claim 2 or 3, **characterized in that** the transporting means (7, 8) each have a movement path extending beyond the stacking apparatuses (4, 5) and the process apparatus (9) and are each designed in the form of transporting carriages with a common guide (27).

5. Restacking arrangement according to one of the preceding claims, **characterized in that** the transporting means (7, 8) have different carrying means (29, 30), which are capable of overlapping one another and can each be moved and controlled, in particular, adjusted in height.

6. Restacking arrangement according to one of the preceding claims, **characterized in that** a carrying means (29, 30) has one or more carrying arms (31, 32) with one or more carrying elements (33, 34) capable of acting on a mount (16, 17) on the article carrier (2), wherein a carrying element (33, 34) is designed in the form of a controlled-movement, in particular extensible carrying pin with a lifting drive.

7. Restacking arrangement according to one of the preceding claims, **characterized in that** the transporting means (7, 8) have carrying arms (31, 32) which are oriented in the movement direction of the transporting means (7, 8), are directed towards one another and overlap one another.

8. Restacking arrangement according to one of the preceding claims, **characterized in that** the stacking apparatuses (4, 5) have a framework (21) with a supporting device (22) for a stack of article carriers (2) and a separating and transfer apparatus (24) for an outer, in particular lower, article carrier (2) in the stack.

9. Restacking arrangement according to Claim 8, **characterized in that** the separating and transfer apparatus (24) is designed for receiving individual article carriers (2) from a transporting means (7, 8) and discharging the same thereto, wherein the separating and transfer apparatus (24) cooperates with the supporting device (22).

10. Restacking arrangement according to either of Claims 8 and 9, **characterized in that** the separating and transfer apparatus (24) has a lifting device (25) with a plurality of lifting fingers (26) which can be moved relative to the transporting means (7, 8).

11. Restacking arrangement according to one of the preceding claims, **characterized in that** an article carrier (2) has a plurality of differently positioned mounts (16, 17) for the carrying means (29, 30) and a plurality of mounts (19, 20) for a supporting device (22) and a separating and transfer apparatus (24) of a stacking apparatus (4, 5).

12. Method of restacking article carriers (2) between a plurality of stacking zones (10, 11), which are spaced apart one beside the other and are intended for receiving and handling in each case at least one article-carrier stack, and a process zone (12) for articles (3), said process zone being arranged between said stacking zones, wherein the article carriers (2) are transported by means of a transporting apparatus (6), which connects the zones (10, 11, 12) and has a transporting means (7, 8), **characterized in that** an article carrier (2) is transported by a plurality of transporting means (7, 8), which move between the stacking apparatuses (4, 5) and the process zone (12) and relative to one another by way of overlapping movement paths and has carrying means (29, 30), wherein the article carrier (2) is transferred between the transporting means (7, 8).

13. Method according to Claim 12, **characterized in that** the article carrier (2) is transferred between the transporting means (7, 8) in the region of the process zone (12).

14. Method according to Claim 12 or 13, **characterized in that**, in the process zone (12), a process apparatus (9) there is used to carry out one or more processes on or with the articles (3).

15. Method according to Claim 12, 13 or 14, **characterized in that**, in the process zone (12), a process apparatus (9) there, defined in the form of a loading apparatus, is used to reload articles (3) individually or in groups between a conveyor and an article carrier (2) supplied by the transporting apparatus (6).

## Revendications

1. Dispositif de transfert pour des rayonnages de support (2) avec plusieurs dispositifs d'empilement (4, 5) disposés côte à côte à une certaine distance les uns des autres pour recevoir et manipuler respectivement au moins une pile de rayonnages de support et une zone de traitement (12) pour marchandises (3) disposée entre ainsi qu'un dispositif de transport (6) reliant les dispositifs d'empilement (4, 5) et la zone de traitement (12) avec un moyen de transport (7, 8) pour les rayonnages de support (2), **caractérisé en ce que** le dispositif de transport (6) comporte plusieurs moyens de transport (7, 8) pouvant se déplacer entre les dispositifs d'empilement (4, 5) et la zone de traitement (12) ainsi que les uns par rapport aux autres à l'aide de pistes de déplacement se chevauchant entre elles, les moyens de transport (7, 8) comportant des moyens de support (29, 30) réalisés pour le transport et pour le transfert mutuel d'un rayonnage de support (2) entre les moyens de transport (7, 8).

2. Dispositif de transfert selon la revendication 1, **caractérisé en ce qu'**un dispositif de traitement (9), notamment un dispositif de charge, est disposé dans la zone de traitement (12) pour charger et/ou décharger des marchandises (3) sur un rayonnage de support (2).

3. Dispositif de transfert selon la revendication 1 ou 2, **caractérisé en ce que** les moyens de transport (7, 8) peuvent être déplacés, notamment conduits, de façon autonome, ceux-ci pouvant être déplacés en continu et/ou de façon cadencée et comportant respectivement un entraînement (35) pouvant être commandé de façon autonome.

4. Dispositif de transfert selon la revendication 2 ou 3, **caractérisé en ce que** les moyens de transport (7, 8) comportent respectivement une piste de déplacement allant jusqu'aux dispositifs d'empilement (4, 5) et au dispositif de traitement (9) et sont respectivement réalisés sous la forme d'un chariot de transport avec un guidage (27) commun.

5. Dispositif de transfert selon l'une quelconque des revendications précédentes, **caractérisé en ce que** les moyens de transport (7, 8) comportent différents moyens de support (29, 30) pouvant se chevaucher les uns les autres, respectivement mobiles et commandables, notamment réglables en hauteur.

6. Dispositif de transfert selon l'une quelconque des revendications précédentes, **caractérisé en ce qu'**un moyen de support (29, 30) comporte un ou plusieurs bras de support (31, 32) avec un ou plusieurs éléments de support (33, 34) pouvant s'engrener au niveau d'un logement (16, 17) prévu au niveau du rayonnage de support (2), un élément de support (33, 34) étant réalisé sous la forme d'un tenon de support pouvant être déplacé de façon commandée, notamment sorti, avec un entraînement de levée.

7. Dispositif de transfert selon l'une quelconque des revendications précédentes, **caractérisé en ce que** les moyens de transport (7, 8) comportent des bras de support (31, 32) placés dans la direction de déplacement du moyen de transport (7, 8), orientés de façon opposée et se chevauchant les uns les autres.

8. Dispositif de transfert selon l'une quelconque des revendications précédentes, **caractérisé en ce que** les dispositifs d'empilement (4, 5) comportent un châssis (21) avec un dispositif de maintien (22) pour une pile de rayonnages de support (2) et un dispositif de séparation et de transfert (24) pour un rayonnage de support (2) extérieur, notamment inférieur, dans la pile.

9. Dispositif de transfert selon la revendication 8, **caractérisé en ce que** le dispositif de séparation et de transfert (24) est réalisé pour prendre et déposer des rayonnages de support (2) individuels au niveau d'un moyen de transport (7, 8), le dispositif de séparation et de transfert (24) coopérant avec le dispositif de maintien (22).

10. Dispositif de transfert selon l'une quelconque des revendications 8 ou 9, **caractérisé en ce que** le dispositif de séparation et de transfert (24) comporte un dispositif de levée (25) avec plusieurs doigts de levée (26) mobiles par rapport aux moyens de transport (7, 8).

11. Dispositif de transfert selon l'une quelconque des revendications précédentes, **caractérisé en ce qu'**un rayonnage de support (2) comporte plusieurs logements (16, 17) positionnés de façon différente pour les moyens de support (29, 30) et plusieurs logements (19, 20) pour un dispositif de maintien (22) et un dispositif de séparation et de transfert (24) d'un dispositif d'empilement (4, 5).

12. Procédé pour transférer des rayonnages de support (2) entre plusieurs zones d'empilement (10, 11) disposées côte à côte à une certaine distance les unes des autres pour recevoir et manipuler respectivement au moins une pile de rayonnages de support et une zone de traitement (12) pour marchandises (3) disposée entre, les rayonnages de support (2) étant transportés au moyen d'un dispositif de transport (6) reliant les zones (10, 11, 12), avec un moyen de transport (7, 8), **caractérisé en ce qu'**un rayonnage de support (2) est transporté par plusieurs moyens de transport (7, 8) se déplaçant entre les dispositifs d'empilement (4, 5) et la zone de traitement (12) ainsi que les uns par rapport aux autres, avec des pistes de déplacement se chevauchant les unes les autres, avec des moyens de support (29, 30), le rayonnage de support (2) étant transféré entre les moyens de transport (7, 8).

13. Procédé selon la revendication 12, **caractérisé en ce que** le rayonnage de support (2) est transféré entre les moyens de transport (7, 8) dans la région de la zone de traitement (12).

14. Procédé selon la revendication 12 ou 13, **caractérisé en ce qu'**un ou plusieurs traitements sont réalisés au niveau des marchandises (3) ou avec elles dans la zone de traitement (12), à l'aide d'un dispositif de traitement (9) s'y trouvant.

15. Procédé selon la revendication 12, 13 ou 14, **caractérisé en ce que** des marchandises (3) sont chargées individuellement ou de façon groupée entre un système de transport et un rayonnage de support (2) mis à disposition par le dispositif de transport (6) dans la zone de traitement (12), avec un dispositif de traitement (9) s'y trouvant réalisé sous la forme d'un dispositif de charge.
